(19) Europäisches Patentamt
European Patent Office
Office européen des brevets

(11) **EP 2 819 832 B1**

(12) **FASCICULE DE BREVET EUROPEEN**

(45) Date de publication et mention
de la délivrance du brevet:
**21.11.2018 Bulletin 2018/47**

(21) Numéro de dépôt: **13713938.2**

(22) Date de dépôt: **28.02.2013**

(51) Int Cl.:
***B29C 65/18*** *(2006.01)*    ***B29K 105/06*** *(2006.01)*

(86) Numéro de dépôt international:
**PCT/FR2013/050433**

(87) Numéro de publication internationale:
**WO 2013/128140 (06.09.2013 Gazette 2013/36)**

(54) **PROCÉDÉ ET DISPOSITIF POUR LE SOUDAGE À HAUTE TEMPÉRATURE D'UN RAIDISSEUR SUR UN PANNEAU COMPOSITE À MATRICE THERMOPLASTIQUE**

VERFAHREN UND VORRICHTUNG ZUM HOCHTEMPERATURSCHWEISSEN EINES VERSTEIFUNGSELEMENTS AN EINE VERBUNDPLATTE MIT EINER THERMOPLASTISCHEN MATRIX

PROCESS AND DEVICE FOR THE HIGH-TEMPERATURE WELDING OF A STIFFENER TO A COMPOSITE PANEL HAVING A THERMOPLASTIC MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.02.2012 FR 1251875**

(43) Date de publication de la demande:
**07.01.2015 Bulletin 2015/02**

(73) Titulaire: **Daher Aerospace**
**41400 Saint Julien De Chedon (FR)**

(72) Inventeurs:
• **KURTZ, Didier**
**F-44210 Pornic (FR)**
• **VAUDOUR, Julie**
**F-44118 La Chevroliere (FR)**

(74) Mandataire: **Ipside**
**29, rue de Lisbonne**
**75008 Paris (FR)**

(56) Documents cités:
**EP-A2- 0 339 494        WO-A2-2010/094808**
**DE-A1-102010 013 713    FR-A1- 2 691 099**
**US-A1- 2010 124 659**

• **WEISS M: "NahtlosesF}genvonFV-Strukturen", INTERNET CITATION, mai 2006 (2006-05), XP007901556, Extrait de l'Internet: URL:http://e-collection.ethbib.ethz.ch/eco l-pool/dipl/dipl_248.pdf [extrait le 2007-01-15]**
• **VAN DREUMEL W H M: "Met continue vezels versterkte thermoplasten", KUNSTSTOF & RUBBER,, vol. 40, no. 2, 1 février 1987 (1987-02-01), page 26, XP001353409,**

## Description

L'invention concerne un procédé et un dispositif pour le soudage à haute température d'un raidisseur sur un panneau composite à matrice thermoplastique. L'invention est plus particulièrement mais non exclusivement, destinée à la fabrication de panneaux raidis constitués d'un matériau composite à renfort fibreux, lesquels panneaux sont utilisés comme éléments de structure pour le fuselage ou la voilure d'un aéronef.

Les panneaux raidis comprennent une peau, dont l'épaisseur est de l'ordre de 1/1000$^{ème}$ de la plus petite dimension du panneau, panneau dont la surface est de l'ordre du m$^2$. Cette peau est raidie par des profilés dont la section transversale, comprend une semelle apte à prendre appui sur une face de la peau et des ailes s'étendant en section dans un plan perpendiculaire à la semelle. À titre d'exemple, la section d'un tel raidisseur est en forme de « T », d'« I », de « L », de « Z » ou d'oméga (Ω) assemblés à la peau par leur semelle, tels que lesdits profilés s'étendent selon une direction, dite longitudinale, sensiblement parallèle à la plus grande dimension de la peau. Selon différents exemples de réalisation, ladite peau est alternativement de forme générale plane, formée selon une forme développable ou selon une forme non développable dite en double courbure. Les raidisseurs longitudinaux, couramment désignés sous le terme de « lisses », s'étendent longitudinalement selon une direction correspondant sensiblement à la direction de plus faible courbure de la peau. Finalement, la peau peut comprendre des variations d'épaisseur qui se traduisent, notamment, par des gradins sur la face de la peau sur laquelle la semelle des raidisseurs prend appui. Si dans le cas d'un panneaux raidi constitué d'un matériau métallique, les lisses sont, le plus souvent, assemblées à la peau par rivetage, dans le cas d'un panneau constitués d'un matériau composite à renfort fibreux les raidisseurs longitudinaux sont préférentiellement assemblés à la peau sans l'intermédiaire de fixations mécaniques, notamment par collage ou par soudage. À titre d'exemple, le document EP-A-2 268 471 décrit un procédé d'assemblage par co-cuisson d'un raidisseur et d'une peau pour la fabrication d'un panneau raidi, le raidisseur et la peau renfort fibreux dans une matrice thermodurcissable. La copolymérisation de la matrice du raidisseur et de la matrice de la peau, permet, au cours de cette opération de co-cuisson de réaliser une soudure du raidisseur sur la peau, la liaison étant réalisée par le matériau constituant la matrice thermodurcissable. Ce procédé nécessite un outillage complexe, dit intégral, apte à conserver l'intégrité géométrique tant de la peau que du raidisseur au cours de l'opération de co-cuisson, lequel outillage comprend notamment des noyaux placés dans les volumes compris entre la peau et la face interne des ailes du raidisseur en oméga. Cet outillage, dont la surface est au moins égale à la surface du panneau est d'un coût de réalisation très élevé et est spécifique à une référence de panneau donnée, or, un aéronef peut comporter plusieurs centaines de références de panneaux.

Le document WO 2010/094808 décrit un procédé et un dispositif adaptés à la liaison localisée d'un raidisseur sur une peau composite thermodurcissable, notamment en vue d'une réparation. Ledit dispositif impose une pression sur l'ensemble de la section du raidisseur, de sorte que lorsque ledit raidisseur comporte une section creuse, celle-ci doit être soutenue par l'insertion d'un noyau dans ladite section.

Les matériaux composites à matrice thermoplastique, plus particulièrement lorsque cette matrice est constituée d'un polymère à haute performance tel que le polyétheréthercétone ou PEEK, présentent des propriétés mécaniques, telles que la résistance aux impacts, et un comportement au feu avantageux qui en font des candidats particulièrement intéressants pour les applications aéronautiques en tant que matériaux de structure. Toutefois, pour obtenir l'assemblage des raidisseurs sur la peau d'un tel panneau à matrice thermoplastique, la matrice doit être portée à une température supérieure à sa température de fusion. D'une part, cette température est élevée, de l'ordre de 400 °C pour une matrice PEEK, ce qui rend complexe la conception de l'outillage notamment vis-à-vis de la maîtrise des dilatations thermiques. D'autre part, la nécessité de mettre la matrice en fusion et l'éventuel foisonnement du polymère fondu nécessitent que l'outillage soit à la fois étanche et permette le contrôle des volumes tout en conservant le placement des renforts au cours des différentes phases de l'opération d'assemblage entre les états condensés et liquides de la matrice. Ces problèmes techniques constituent des freins à l'utilisation des matériaux composites à matrice thermoplastique pour la constitution de panneaux raidis de grande dimension. dimension.

Le document « Nahtloses Fügen von FV-Strukturen » Michael Weiss, Diplomarbeit Nr. 06-003, décrit un dispositif de soudage de deux pièces constituées d'un matériau composite. Les faces soudées sont prises entre une enclume et un poinçon par l'intermédiaire d'un coussin en matériau viscoélastique, la pression exercée par l'enclume et le poinçon étant perpendiculaire à la pression de maintien des interfaces réalisant la soudure.

Le document « Met continue vezels versterkte thermoplasten » Van Dreumel WH, Kunstoff & Rubber, Vol. 40 n°2, 1987-02-01 décrit un dispositif et un procédé pour le soudage d'un raidisseur comportant une semelle sur une peau, la peau et le raidisseur étant constitués d'un composite comprenant une matrice constituée d'un polymère thermoplastique. Ce dispositif comporte un poinçon chauffant, une enclume et des moyens de pression aptes à réaliser un serrage entre le poinçon et l'enclume.

L'invention vise à résoudre les inconvénients de l'art antérieur et concerne à cette fin le dispositif selon la revendication 1.

Ainsi, par la combinaison du chauffage localisé de la semelle du raidisseur et du refroidissement de l'enclume, le dispositif objet de l'invention permet de chauffer de manière localisée l'interface entre la semelle du raidisseur et la peau, et par l'application localisée de la pression de serrage, permet de réaliser la soudure et de contenir le foisonnement du polymère constituant la matrice pendant l'opération de soudage, les parties du raidisseur et de la peau non soumis au soudage restant rigides. Les dimensions latéralement réduites du poinçon et de l'enclume permettent de réduire très nettement le coût de fabrication de l'outillage, de réduire son inertie thermique globale et ainsi de réduire les temps de cycle, mais aussi permettent d'assurer une pression uniforme de contact dans la zone de soudage. Le dispositif objet de l'invention peut également être adapté à plusieurs références de pièces en changeant simplement les interfaces de contact du poinçon et de l'enclume.

L'invention concerne également un procédé mettant en oeuvre le dispositif objet de l'invention, pour le soudage d'un raidisseur comportant une semelle sur une peau, la peau et le raidisseur étant constitués d'un composite comprenant une matrice constituée d'un polymère thermoplastique, lequel procédé comprenant les étapes

i. placer la peau et la semelle du raidisseur entre l'enclume et le poinçon ;

ii. activer l'élément chauffant de sorte à porter la partie de la semelle exposée au chauffage à une température Tf égale ou supérieure à la température de fusion de la matrice pendant un temps t ;

iii. appliquer un serrage déterminé entre la semelle et la peau par l'intermédiaire du poinçon et de l'enclume ;

iv. relâcher la pression entre le poinçon et l'enclume lorsque la température à l'interface entre la semelle et la peau est inférieure ou égale à la température de transition vitreuse du polymère constituant la matrice du composite.

Ce procédé permet, en contrôlant la température Tf et le temps t, d'obtenir un profil de diffusion de la chaleur trapézoïdal dans la semelle du raidisseur et de limiter la zone affectée thermiquement par le soudage dans la peau de sorte à maintenir après soudage la compacité nominale du matériau composite et éviter, notamment, les phénomènes d'essorage.

L'invention est avantageusement mise en oeuvre selon les modes de réalisation exposés ci-après, lesquels sont à considérer individuellement ou selon toute combinaison techniquement opérante.

Avantageusement, la largeur de l'enclume est sensiblement égale à la largeur de la semelle du raidisseur. Ainsi, l'enclume est apte à appliquer une pression très localisée dans une zone correspondant précisément à la zone affectée thermiquement.

Avantageusement, l'enclume est constituée d'un matériau dont l'effusivité thermique est au moins 10 fois supérieure à l'effusivité thermique des matériaux composites constituant la peau et le raidisseur. Ainsi, l'enclume en plus de sa fonction mécanique joue un rôle de puits de chaleur évitant que la peau ne soit déconsolidée sur toute son épaisseur lors de l'opération de soudage.

Selon un mode de réalisation avantageux, l'enclume comprend un conduit pour la circulation d'un fluide. Ainsi, l'enclume peut être refroidie et sa température contrôlée de sorte à maîtriser le transfert thermique à travers la peau.

Selon un mode de réalisation avantageux du dispositif objet de l'invention, adapté à une mise en oeuvre en grande série, la table de pressage comprend une partie constituée d'un matériau céramique. Ce mode de réalisation permet d'obtenir une interface de pressage thermiquement isolante et stable dimensionnellement tout en présentant une excellente résistance à l'usure et durable.

Selon un autre mode de réalisation adapté à la réalisation de panneaux de forme plus complexe, la table de pressage comprend une partie constituée d'un matériau comprenant au moins 90 % de mica. Ce type de matériau composite présente des caractéristiques d'isolation thermique et de dilatation comparables au précédent mais est facilement usinable donc adaptable en forme.

L'élément chauffant comprend une plaque métallique en contact avec la semelle du raidisseur, la partie de la table de pressage entourant cette plaque métallique étant constituée d'un matériau thermiquement isolant. Ceci permet une réalisation simple de l'élément chauffant et un transfert efficace et localisé de la chaleur à la semelle du raidisseur.

Le dispositif objet de l'invention comprend :

d. un effecteur additionnel apte à appliquer une pression sur une aile du raidisseur.

Ceci est plus particulièrement adapté au soudage d'un raidisseur comprenant un soyage sur une peau comportant un gradin.

Cet effecteur additionnel permet de contraindre la semelle du raidisseur, ramollie par la température, à épouser la variation de forme de la peau.

Avantageusement, l'effecteur additionnel est constitué d'un matériau dont l'effusivité thermique est au moins 10 fois supérieure à celle du polymère constituant la matrice du composite. Ainsi, l'effecteur additionnel assure un refroidissement efficace de l'aile sur laquelle il agit, de sorte à conserver celle-ci dans un état solide et appliquer la pression nécessaire à la conformation du raidisseur à la forme de la peau.

Avantageusement, l'effecteur additionnel comprend un conduit pour la circulation d'un fluide de refroidissement. Ainsi, un refroidissement supplémentaire permet de conserver l'aile dans un état solide et/ou re réduire le temps de cycle pour réaliser la soudure.

Selon un mode de réalisation du procédé objet de l'invention, la température Tf est supérieure de 5 °C à 10 °C à la température de fusion du polymère constituant la matrice du matériau composite. Ainsi, la température de chauffage modérée permet de profiter du temps de propagation de la chaleur dans la semelle pour appliquer celle-ci sur la peau et réaliser la soudure et limite également le foisonnement de la matrice.

Selon un mode de réalisation avantageux du procédé objet de l'invention, utilisant un dispositif dont l'enclume comprend des conduits pour la circulation d'un fluide, celui-ci comprend une étape consistant à :

> v. faire circuler un fluide caloporteur dans le conduit de l'enclume pendant les étapes ii) à iii).

Ainsi, la circulation du fluide permet de réguler la température de l'enclume offrant ainsi un paramètre de contrôle supplémentaire pour ajuster la distribution de température à l'interface entre la semelle du raidisseur et la peau.

L'invention est exposée ci-après selon ses modes de réalisation préférés, nullement limitatifs, et en référence aux figures 1 à 5, dans les quelles :

- la figure 1 représente selon une vue en perspective une portion d'un panneau raidi par un raidisseur en forme d'Oméga ;
- la figure 2 est une vue partielle selon une coupe AA définie figure 1, montrant un exemple de réalisation d'un dispositif qui ne correspond pas à l'objet de l'invention pour l'assemblage du raidisseur et de la peau du panneau de la figure 1 ;
- la figure 3 illustre selon une vue de détail de la figure 2 la répartition schématique des températures dans l'épaisseur de l'assemblage ;
- la figure 4 représente un organigramme correspondant aux étapes de mise en oeuvre du procédé objet de l'invention ;
- la figure 5 montre selon une vue partielle en coupe AA, un exemple de réalisation du dispositif objet de l'invention dans lequel un effecteur additionnel permet du action de pressage sur une aile du raidisseur.

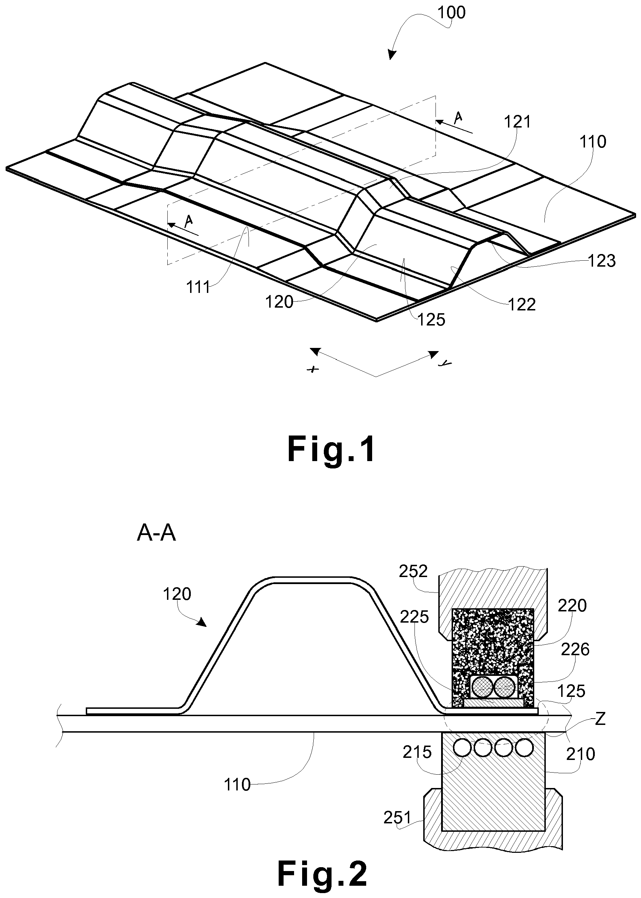

Figure 1, selon un exemple de réalisation, un panneau raidi (100) comprend une peau (110) assemblée avec un raidisseur (120), par exemple un profilé en forme d'oméga (Ω). Le panneau (100) est ici représenté plan pour des raisons de simplification graphique, néanmoins l'invention est applicable à un panneau présentant une courbure selon sa direction transversale (y) ou selon sa direction longitudinale (x). Sans que ceci ne constitue une limitation, le raidisseur (120) est assemblé avec la peau de sorte que celui-ci s'étend selon la direction longitudinale (x) du panneau qui, pour des applications aéronautiques, correspond généralement à la direction de plus faible courbure. Typiquement le rayon de courbure minimum selon la direction transversale est supérieur à 250 mm et le rayon de courbure minimum selon la direction longitudinale est supérieur à 1 mètre. L'épaisseur de la peau est typiquement comprise entre 1 mm et 10 mm mais peut comporter des zones de renforcement locales (111) qui créent des gradins sur la surface de la peau, lesquels gradins correspondent à des soyages (121) sur le raidisseur (120). Le raidisseur (120) comporte une semelle (125) appuyée sur la peau et des ailes (122, 123) s'étendant en section dans un plan perpendiculaire à la semelle (125). Selon un exemple de réalisation adapté au procédé de mise en oeuvre objet de l'invention, la peau (110) et le raidisseur (120) sont constitués d'un matériau composite à renfort fibreux continu dans une matrice constituée d'un polymère thermoplastique. À titre d'exemple non limitatif, la matrice est constituée de polyéthertéthercétone ou PEEK renforcée par des plis de fibres de carbone. La peau et le raidisseur sont ainsi obtenus par des techniques connues de l'art antérieur, consistant à empiler des plis de fibres pré-imprégnés de PEEK suivies d'une opération de compactage consolidation et éventuellement d'une opération de mise en forme.

Figure 2, selon un exemple de réalisation d'un dispositif qui ne correspond pas à l'objet de l'invention, celui-ci comprend un poinçon (220) et une enclume (210) apte à prendre en étau la peau (110) et le raidisseur (120) à hauteur de la semelle (125) dudit raidisseur. À cette fin, le poinçon (220) et l'enclume (210) sont installés sur les plateaux (251, 252) d'une presse. Le poinçon (220) est constitué d'une matière à faible conductivité thermique et d'une effusivité thermique du même ordre de grandeur que la matrice thermoplastique du composite constituant le raidisseur (120). Selon un exemple de réalisation, le poinçon est constitué d'un composite comprenant 90 % de mica et du silicone. L'enclume (210) est constituée d'un matériau de forte conductivité thermique et d'effusivité thermique élevée, entre 10 et 100 fois plus élevée que l'effusivité thermique de la matrice thermoplastique du composite constituant la peau (110). À titre d'exemple non limitatif, l'enclume est constituée de cuivre, au moins pour la partie en contact avec la peau. L'effusivité thermique « E » est définie par la relation :

$$E = \sqrt{\lambda . \rho . C}$$

où $\lambda$ est le coefficient de conductivité thermique du matériau, $\rho$ sa masse volumique et C sa chaleur spécifique. L'effusivité thermique d'un matériau quantifie sa capacité à échanger de la chaleur avec son environnement. Ainsi l'effusivité thermique du PEEK est de l'ordre 330 $J.K^{-1}.m^{-2}.s^{-1/2}$, l'effusivité thermique du cuivre est de l'ordre de 36 000 $J.K^{-1}.m^{-2}.s^{-1/2}$, celle de l'acier, de l'ordre de 14 000 $J.K^{-1}.m^{-2}.s^{-1/2}$. Lorsqu'un premier matériau d'effusivité thermique $E_1$ est porté à la température $T_1$ et est mis en contact avec un second matériau, d'effusivité thermique $E_2$ à la température $T_2$, la température $T$ immédiate (en négligeant la résistance de contact) à l'interface des deux matériaux est donnée par la relation :

$$T = \frac{E_1 T_1 + E_2 T_2}{E_1 + E_2}$$

Ainsi l'enclume produit un refroidissement efficace de la face de la peau avec laquelle elle est en contact.

Selon l'exemple de réalisation qui ne correspond pas à l'objet de l'invention et représenté figure 2, le poinçon (220) comporte des moyens de chauffage comprenant une plaque métallique (225) enserrée dans la partie isolante et des résistances électriques (226) aptes à chauffer ladite plaque métallique. Ces résistances électriques sont avantageusement de type autorégulé lorsque la température de soudage est compatible avec cette technologie. L'enclume (210) est percée de conduits (215) dans lesquels circule un fluide caloporteur sous forme gazeuse ou liquide. Ainsi, la température de l'enclume est régulée de même que la température et le temps de chauffage au niveau du poinçon, de sorte à obtenir le gradient spatial de température selon l'épaisseur de l'assemblage et selon la largeur de la semelle (125).

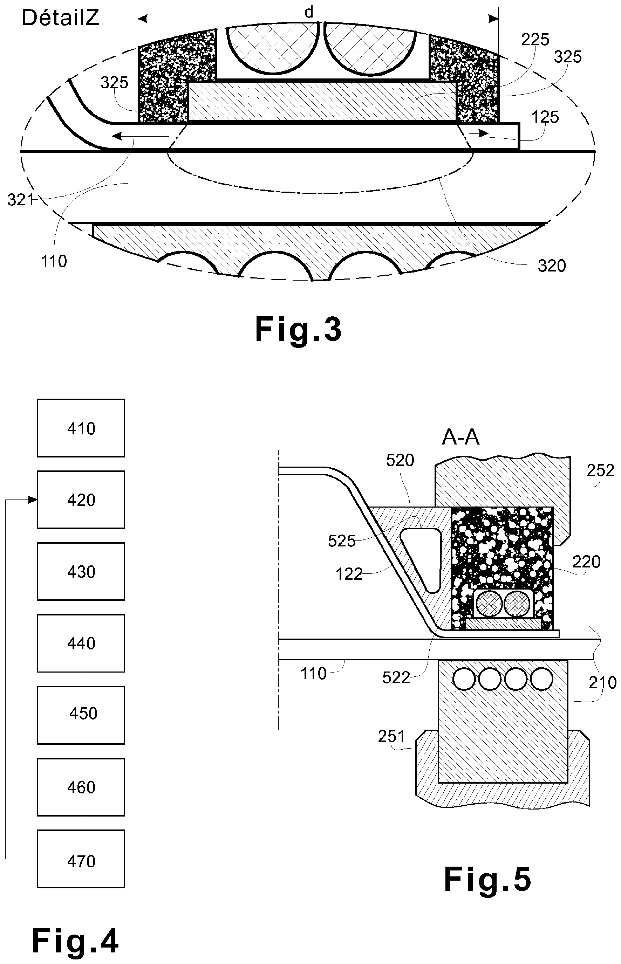

Figure 3, la partie (325) isolante thermiquement du poinçon et la plaque métallique (225) de chauffage forment au contact de la semelle (125) du raidisseur une table de pressage de largeur (d), sensiblement égale à la largeur de la semelle (125). La combinaison de la localisation du chauffage sur la largeur de la plaque (225) chauffante et de l'effet de refroidissement de l'enclume (210) produit dans l'épaisseur de la semelle un profil (320) de distribution de température sensiblement trapézoïdale, le front de fusion s'étendant par ailleurs latéralement (321) dans la semelle. Ainsi, le volume de matrice mis en fusion lors du chauffage correspond, en section, à ce profil (320). Dans la peau (110), ce volume mis en fusion est contenu par la part de matrice restant solide, la fusion n'affectant qu'un ou deux plis en épaisseur et sur une largeur inférieure ou égale à la largeur de la semelle (120) du raidisseur.

Selon un exemple de réalisation préféré, la plaque chauffante (225) du poinçon est portée à une température Tf très légèrement supérieure, entre 5 °C et 10 °C, à la température de fusion du polymère constituant la matrice du composite constituant le raidisseur, de sorte que la semelle (125) se trouve, dans la partie mise en fusion, dans un état pâteux. Les parties (325) thermiquement isolantes du poinçon appuient sur des parties initialement solides de matrice ce qui permet d'appliquer un serrage entre la semelle (125) et la peau (110), ces parties de semelle initialement solides, étant ensuite mises en fusion, également dans un état pâteux, par la propagation (321) du front de fusion. Le maintient de l'écartement des plateaux (251, 252) de la presse pendant cette mise en fusion totale de la semelle permet de conserver le volume et d'éviter les essorages ou le déplacement des plis. Ce positionnement des plateaux (251, 252) est conservé jusqu'au refroidissement de la zone fondue et que celle-ci atteigne un état de condensation adapté, d'une manière générale, jusqu'à ce que la température de la zone affectée thermiquement soit égale ou inférieure à la température de transition vitreuse du polymère. La température Tf de chauffage relativement faible impose pour réaliser la soudure d'appliquer une pression suffisante à l'interface pour réaliser la diffusion des segments de chaînes moléculaire à travers cette interface. Le procédé objet de l'invention, par la largeur réduite du poinçon (220) et de l'enclume (210) permet d'appliquer cette pression de manière efficace et localisée.

La forme (320) de la zone fondue et son évolution temporelle sont déterminées par la température Tf de chauffage et le temps de chauffage t appliqués, ainsi que par la température de l'enclume (110). Ces conditions de mise en oeuvre sont, par exemple, déterminées par des essais ou par des simulations thermiques en fonction des matériaux assemblés et de leurs caractéristiques dimensionnelles. La température de chauffage Tf est au moins égale à la température de fusion du polymère constituant la matrice du matériau composite et avantageusement légèrement supérieure à celle-ci. Ainsi, la zone (320) thermiquement affectée par la fusion est réduite, et même si la température de fusion du polymère constituant la matrice est très élevée, comme dans le cas du PEEK, le temps d'un cycle de soudage est bref, généralement inférieur à 10 secondes, notamment du fait de la faible inertie thermique du poinçon (220) et de l'enclume (210) en regard des outillages intégraux de l'art antérieur.

En revenant à la figure 2, le poinçon (220) et l'enclume (210) sont montés de manière amovible sur les plateaux (251, 252) de la presse, de sorte qu'ils peuvent être changés pour s'adapter à la forme de la peau et du raidisseur, en fonction de la largeur des semelles (225) mais aussi de la courbure des panneaux. Plus particulièrement, le poinçon (220), voire l'enclume (210), peuvent être usinés pour suivre les gradins de la peau et les soyages des raidisseurs. Ainsi, la partie isolante du poinçon est avantageusement constituée de mica ou d'un composite de mica, lequel est facilement usinable et adaptable avec précision tout en offrant des qualités d'isolation thermique élevées. Alternativement, la partie isolante du poinçon peut être constituée d'un matériau céramique tel que de l'alumine ou de la zircone pour une résistance accrue à l'usure.

Figure 4, selon un exemple de réalisation, le procédé objet de l'invention comprend une première étape de placement (410) consistant à installer les raidisseurs sur la peau. Ceux-ci peuvent être maintenus localement et de manière provisoire, par exemple, au moyen d'adhésifs. Au cours d'une étape (420) positionnement, la semelle d'un premier raidisseur et la peau sont placées entre le poinçon et l'enclume. Au cours d'une étape suivante (430), la circulation du fluide caloporteur est enclenchée dans l'enclume. Au cours d'une étape de chauffage (440) les résistances sont alimentées en courant électrique de sorte à porter la plaque chauffante à une température au moins égale à la température de fusion de la matrice pendant un temps $t$. Après un temps $t_1$ inférieur à $t$, la semelle du raidisseur est appliquée contre la peau au cours d'une étape de pressage (450), le contact est maintenu entre la semelle et la peau en conservant l'écartement des plateaux de la presse jusqu'à la fin du temps $t$. Au cours d'une étape (460) de refroidissement, le chauffage étant arrêté, la circulation du fluide caloporteur conservée, de même que le serrage, jusqu'à ce que la température de la zone affectée thermiquement atteigne la température de transition vitreuse de la matrice. Ce temps de refroidissement peut être déterminé par des essais ou des simulations, ou, la température peut être contrôlée par un thermocouple placé sur la plaque de chauffage. Au cours d'une étape de déplacement (470), les plateaux de la presse sont ouverts et le panneau est déplacé pour réaliser l'assemblage suivant.

Figure 5, le dispositif objet de l'invention comprend un effecteur (520) supplémentaire. Cet effecteur permet d'appliquer une pression de serrage sur le raidisseur en agissant sur une aile (122) du raidisseur, notamment une aile (122) adjacente à la semelle dudit raidisseur, ou sur le raccordement (522) entre cette aile (122) et la semelle (125) du raidisseur. Ceci est plus particulièrement adapté pour conformer la semelle du raidisseur à la forme de la peau. Ainsi, ce mode de réalisation du dispositif objet de l'invention permet de corriger les légers défauts de concordance de forme entre le raidisseur et la peau lorsque ceux-ci sont courbes ou entre un soyage du raidisseur et un gradin sur la peau. Ledit effecteur (520) additionnel permet d'appliquer une pression de conformage sur le raidisseur alors que la semelle se trouve dans un état pâteux. À cette fin, l'effecteur additionnel est préférentiellement constitué d'un matériau métallique d'effusivité thermique élevée, et selon un mode de réalisation avantageux, comprend un conduit de refroidissement (525) pour la circulation d'un fluide caloporteur, liquide ou gazeux.

La description ci-avant et les exemples de réalisation montrent que l'invention atteint les objectifs visés, en particulier elle permet de réaliser l'assemblage par soudage à haute température d'un raidisseur et d'une peau constitués d'un composite à matrice thermoplastique au moyen d'un outillage simplifié, de faible inertie thermique, en conservant l'intégrité géométrique des éléments en présence et sans déconsolider les parties assemblées, par la maîtrise de la forme et de la propagation du front de fusion dans la semelle du raidisseur et de la peau.

## Revendications

**1.** Dispositif apte à coopérer avec une peau (110) et un raidisseur (120) constitués d'un composite comprenant une matrice polymère thermoplastique, ledit raidisseur comportant une semelle (125) de largeur inférieure à la largeur de la peau, pour le soudage de ladite semelle sur une face de ladite peau (110), comportant :

    a. un poinçon (220) comprenant une partie formant table de pressage dont la largeur en section transversale est inférieure ou égale à la largeur de la semelle (125) du raidisseur, et un élément chauffant (225, 226) de largeur inférieure à la largeur de la table de pressage, l'élément chauffant comprenant une plaque métallique (225) en contact avec la semelle (125) du raidisseur (120), la partie (325) de la table de pressage entourant cette plaque métallique (225) étant constituée d'un matériau thermiquement isolant;
    b. une enclume (210) dont la largeur en section est inférieure à la largeur de la peau, laquelle enclume comprend des moyens de refroidissement ;
    c. des moyens de pression (251, 252) aptes à réaliser un serrage entre le poinçon et l'enclume;
    d. un effecteur (520) additionnel apte à appliquer une pression sur une aile (122, 522) du raidisseur.

**2.** Procédé mettant en oeuvre un dispositif selon la revendication 1, pour le soudage d'un raidisseur (120) comportant une semelle (125) sur une peau (110), la peau et le raidisseur étant constitués d'un composite comprenant une matrice constituée d'un polymère thermoplastique, comprenant les étapes consistant à :

    i. placer (420) la peau (110) et la semelle (125) du raidisseur entre l'enclume (210) et le poinçon (220) ;
    ii. activer (440) l'élément chauffant (225, 226) de sorte à porter la partie de la semelle exposée au chauffage à une température Tf égale ou supérieure à la température de fusion de la matrice pendant un temps t ;
    iii. appliquer (450) un serrage déterminé entre la semelle (125) et la peau (110) par l'intermédiaire du poinçon (220) et de l'enclume (210) ;
    iv. relâcher (470) la pression entre le poinçon (220) et l'enclume (210) lorsque la température à l'interface entre la semelle (125) et la peau (110) est inférieure ou égale à la température de transition vitreuse du polymère constituant la matrice du composite.

**3.** Dispositif selon la revendication 1, dans lequel la largeur de l'enclume (210) est sensiblement égale à la largeur de la semelle (125) du raidisseur (120).

**4.** Dispositif selon la revendication 1, dans lequel l'enclume (210) est constituée d'un matériau dont l'effusivité thermique est au moins 10 fois supérieure à l'effusivité thermique du polymère constituant la matrice du matériau composite.

**5.** Dispositif selon la revendication 1, dans lequel l'enclume (210) comprend un conduit (215) pour la circulation d'un fluide.

**6.** Dispositif selon la revendication 1, dans lequel la table de pressage comprend une partie (325) constituée d'un matériau céramique.

**7.** Dispositif selon la revendication 1, dans lequel la table de pressage comprend une partie (325) constituée d'un matériau comprenant au moins 90% de mica.

**8.** Dispositif selon la revendication 1, dans lequel l'effecteur (520) additionnel est constitué d'un matériau dont l'effusivité thermique est au moins 10 fois supérieure à celle du polymère constituant la matrice du composite.

**9.** Dispositif selon la revendication 8, dans lequel l'effecteur (520) additionnel comprend un conduit (525) pour la circulation d'un fluide de refroidissement.

**10.** Procédé selon la revendication 2, dans lequel la température Tf est supérieure de 5 °C à 10 °C à la température de fusion du polymère constituant la matrice du matériau composite.

**11.** Procédé selon la revendication 2, utilisant un dispositif selon la revendication 5, comprenant une étape consistant à :

v. faire circuler (430) un fluide caloporteur dans le conduit (215) de l'enclume (210) pendant les étapes ii) à iii).

**Patentansprüche**

**1.** Vorrichtung, die imstande ist, mit einer Haut (110) und einer Versteifung (120) zusammenzuwirken, die aus einem Verbundstoff gebildet werden, der eine thermoplastische Polymermatrix umfasst, wobei die Versteifung eine Sohle (125) mit einer Breite kleiner als die Breite der Haut zum Schweißen der Sohle auf eine Fläche der Haut (110) beinhaltet, Folgendes beinhaltend:

a. einen Stempel (220), einen Abschnitt umfassend, der einen Presstisch bildet, dessen Breite im Querschnitt kleiner oder gleich der Breite der Sohle (125) der Versteifung ist, und ein Heizelement (225, 226) mit einer Breite kleiner als die Breite des Presstisches, wobei das Heizelement eine Metallplatte (225) in Kontakt mit der Sohle (125) der Versteifung (120) umfasst, wobei der Abschnitt (325) des Presstisches, der diese Metallplatte (225) umgibt, aus einem wärmeisolierenden Material gebildet wird;
b. einen Amboss (210), dessen Breite im Schnitt kleiner ist, als die Breite der Haut, wobei der Amboss Mittel zum Kühlen umfasst;
c. Druckmittel (251, 252), die imstande sind, eine Klemmung zwischen dem Stempel und dem Amboss durchzuführen;
d. einen zusätzlichen Effektor (520), der imstande ist, einen Druck an einen Flügel (122, 522) der Versteifung anzulegen.

**2.** Verfahren, das eine Vorrichtung nach Anspruch 1 zum Schweißen einer Versteifung (120), die eine Sohle (125) beinhaltet, auf einer Haut (110) einsetzt, wobei die Haut und die Versteifung aus einem Verbundstoff gebildet werden, der eine Matrix umfasst, die aus einem thermoplastischen Polymer gebildet wird, die Schritte umfassend, die darin bestehen:

i. die Haut (110) und die Sohle (125) der Versteifung zwischen den Amboss (210) und den Stempel (220) zu platzieren (420);
ii. das Heizelement (225, 226) derart zu aktivieren (440), um den Abschnitt der Sohle, welcher der Heizung ausgesetzt ist, eine Zeit t lang auf eine Temperatur Tf größer oder gleich der Schmelztemperatur der Matrix zu bringen;
iii. anhand des Stempels (220) und des Ambosses (210) eine bestimmte Klemmung zwischen der Sohle (125) und der Haut (110) anzulegen (450);
iv. den Druck zwischen dem Stempel (220) und dem Amboss (210) zu lösen (470), wenn die Temperatur an der Schnittstelle zwischen der Sohle (125) und der Haut (110) kleiner oder gleich der Glasübergangstemperatur des Polymers ist, aus dem die Matrix des Verbundstoffes gebildet ist.

**3.** Vorrichtung nach Anspruch 1, wobei die Breite des Ambosses (210) im Wesentlichen gleich der Breite der Sohle (125) der Versteifung (120) ist.

**4.** Vorrichtung nach Anspruch 1, wobei der Amboss (210) aus einem Material gebildet wird, dessen Wärmeeindringkoeffizient mindestens 10 Mal größer ist, als der Wärmeeindringkoeffizient des Polymers, aus dem die Matrix des Verbundstoffmaterials gebildet ist.

**5.** Vorrichtung nach Anspruch 1, wobei der Amboss (210) eine Rohrleitung (215) zur Zirkulation eines Fluids umfasst.

**6.** Vorrichtung nach Anspruch 1, wobei der Presstisch einen Abschnitt (325) umfasst, der aus einem Keramikmaterial gebildet wird.

**7.** Vorrichtung nach Anspruch 1, wobei der Presstisch einen Abschnitt (325) umfasst, der aus einem Material gebildet wird, das mindestens 90% an Glimmer umfasst.

**8.** Vorrichtung nach Anspruch 1, wobei der zusätzliche Effektor (520) aus einem Material gebildet wird, dessen Wärmeeindringkoeffizient mindestens 10 Mal größer ist, als jener des Polymers, aus dem die Matrix des Verbundstoffes gebildet wird.

**9.** Vorrichtung nach Anspruch 8, wobei der zusätzliche Effektor (520) eine Rohrleitung (525) zur Zirkulation eines Kühlfluids umfasst.

**10.** Verfahren nach Anspruch 2, wobei die Temperatur Tf um 5°C bis 10°C höher ist, als die Schmelztemperatur des Polymers, aus dem die Matrix des Verbundstoffmaterials gebildet ist.

**11.** Verfahren nach Anspruch 2, das eine Vorrichtung nach Anspruch 5 verwendet, einen Schritt umfassend, der darin besteht:

v. während der Schritte ii) bis iii) ein Wärmeträgerfluid in der Rohrleitung (215) des Ambosses (210) zirkulieren zu lassen (430).

**Claims**

**1.** Device able to cooperate with a skin (110) and a stiffener (120) made of a composite comprising a thermoplastic polymer matrix, said stiffener comprising a base plate (125) with a width less than the width of the skin, for welding said base plate to a face of said skin (110), comprising:

a. a punch (220) comprising a part that forms a press table the cross-sectional width of which is less than or equal to the width of the base plate (125) of the stiffener, and a heating element (225, 226) with a width less than the width of the press table, the heating element comprising a metal plate (225) in contact with the base plate (125) of the stiffener (120), the part (325) of the press table surrounding this metal plate (225) being made of a thermally insulating material;
b. an anvil (210) of which the cross-sectional width is less than the width of the skin, said anvil comprises cooling means;
c. pressing means (251, 252) capable of carrying out a clamping between the punch and the anvil;
d. an additional effector (520) capable of applying a pressure on a flange (122, 522) of the stiffener.

**2.** Method implementing a device according to claim 1, for the welding of a stiffener (120) comprising a base plate (125) on a skin (110), the skin and the stiffener being made of a composite comprising a thermoplastic polymer matrix comprising, comprising the steps consisting in:

i. placing (420) the skin (110) and the base plate (125) of the stiffener between the anvil (210) and the punch (220);
ii. activating (440) the heating element (225, 226) in such a way as to bring the part of the base plate exposed to the heat to a temperature Tf greater than or equal to the melting temperature of the matrix for a time t;
iii. applying (450) a determined clamping between the base plate (125) and the skin (110) by way of the punch (220) and of the anvil (210);
iv. releasing (470) the pressure between the punch (220) and the anvil (210) when the temperature at the interface between the base plate (125) and the skin (110) is less than or equal to the glass transition temperature of the polymer making the matrix of the composite.

**3.** Device according to claim 1, wherein the width of the anvil (210) is substantially equal to the width of the base plate (125) of the stiffener (120).

**4.** Device according to claim 1, wherein the anvil (210) is made of a material the thermal effusivity of which is at least 10 times higher than the thermal effusivity of the polymer making the matrix of the composite material.

**5.** Device according to claim 1, wherein the anvil (210) comprises a duct (215) for the circulation of a fluid.

**6.** Device according to claim 1, wherein the press table comprises a part (325) made of a ceramic material.

**7.** Device according to claim 1, wherein the press table comprises a part (325) made of a material containing at least 90% of mica.

**8.** Device according to claim 1, wherein the additional effector (520) is made of a material the thermal effusivity of which is at least 10 times higher than that of the polymer making the matrix of the composite.

**9.** Device according to claim 8, wherein the additional effector (520) comprises a duct (525) for the circulation of a cooling fluid.

10. Method according to claim 2, wherein the temperature Tf is greater, by 5 °C to 10°C, than the melting temperature of the polymer making the matrix of the composite material.

11. Method according to claim 2, using a device according to claim 5, comprising a step consisting in: v. circulating (430) a heat-transfer fluid in the duct (215) of the anvil (210) during steps ii) to iii).

**Fig.1**

A-A

**Fig.2**

DétailZ

d

225
325
325
325
125
321
110
320

**Fig.3**

410
420
430
440
450
460
470

**Fig.4**

A-A

520
252
525
122
220
110
522
210
251

**Fig.5**

## RÉFÉRENCES CITÉES DANS LA DESCRIPTION

**Documents brevets cités dans la description**

- EP 2268471 A

- WO 2010094808 A

**Littérature non-brevet citée dans la description**

- **MICHAEL WEISS.** Nahtloses Fügen von FV-Strukturen. *Diplomarbeit Nr. 06-003*

- **VAN DREUMEL WH ; KUNSTOFF ; RUBBER.** *Met continue vezels versterkte thermoplasten,* 01 Février 1987, vol. 40 (2